Europäisches Patentamt

(19) European Patent Office (11) Publication number: **0 118 279**

Office européen des brevets **B1**

(12) **EUROPEAN PATENT SPECIFICATION**

(45) Date of publication of the patent specification: (51) Int. Cl.⁴: **F 16 C 32/06,** F 16 C 32/00
23.07.86

(21) Application number: **84301285.7**

(22) Date of filling: **28.02.84**

(54) Cylindrical squeeze bearing assembly.

(30) Priority: **28.02.83 US 470661**

(43) Date of publication of application:
**12.09.84 Bulletin 84/37**

(45) Publication of the grant of the patent:
**23.07.86 Bulletin 86/30**

(84) Designated Contracting States:
**DE FR GB**

(56) References cited:
**EP-A-0 067 317**
**US-A-3 433 538**

(73) Proprietor: **International Business Machines
Corporation, Old Orchard Road, Armonk, N.Y.
10504 (US)**

(72) Inventor: **Engwall, Mats Anders, 1551 Sunset
Drive, Hollister California 95023 (US)**

(74) Representative: **Hobbs, Francis John, IBM United
Kingdom Patent Operations Hursley Park,
Winchester, Hants, SO21 2JN (GB)**

## Description

This invention relates to cylindrical squeeze bearings.

The general principles of operation of squeeze bearings are set forth in an article entitled "Compressible Squeeze Films and Squeeze Bearings" by E. O. Salbu in the June 1964 issue of the Trans. ASME Journal of Basic Engineering. Since the publication of that article various configurations for bearing assemblies have been suggested, along with improvements in the bearing materials and in construction of the bearing elements per se. Interest has developed in the use of tubular shaped squeeze bearing arrangements for the transducer carriage assembly of the transducer positioning system of a rotating magnetic disk file (see, for example, EP-AI 67317)

The prior art has shown that considerable improvement in the bearing quality, i.e., the load carrying capacity and the bearing stiffness, is obtained when one of the tubular or cylindrical bearing members is what is referred to as a bimorph element. Generally, a bimorph element comprises a cylinder of piezoceramic material, such as PZT-4, which is integral with a cylinder of bearing material such as Pyrex glass. The bimorph structure functions as the energizing transducer for the squeeze bearing by causing the bearing surface to vibrate or oscillate relative to an adjacent bearing surface of the other bearing member to produce the air pumping action necessary to establish the squeeze bearing system.

It is known that the piezoceramic material in the energizing transducer of the cylindrical bearing member is subject to mechanical failure due to fatigue of the material which is subjected to cyclic loading during normal operation. The high frequency stress reversals (tensile to compressive and back to tensile, etc.) are especially undesirable since they establish a fairly low nominal allowable stress. The number of stress reversal cycles reaching 100 million cycles in less than an hour at ultrasonic frequencies makes it necessary to use an endurance stress limit in the design calculation of squeeze bearing members. The maximum stresses encountered depend upon deflection of the squeeze bearing at the resonance frequency and the associated electric field strength (i.e., the applied voltage for a given geometry). Since mechanical failure is, in fact, the common failure mode, the endurance limit establishes an upper bound for deflections and applied voltage for the'squeeze bearing, thus limiting obtainable load capacity and bearing stiffness.

The invention seeks to provide an improved squeeze bearing assembly which does not suffer from the aforementioned problems.

A cylindrical squeeze bearing assembly comprising first and second coaxially arranged bearing members, the second bearing member being disposed within the first bearing member and one of the bearing members incorporating a piezoceramic driving member, is characterised, according to the invention, by the piezoceramic driving member being held within a prestressing member so as to subject the piezoceramic member to radial and circumferential compression.

By prestressing the piezoceramic driving member in radial and circumferential directions so that it is in compression, the cyclic tensile stresses, which are also radial and circumferential, can be automatically eliminated. Accordingly, such a squeeze bearing assembly will not fail due to fatigue of the piezoceramic material resulting from high frequency stress reversals.

It has also been found that in addition to the fatigue failure mechanism mentioned above, sporadic occurrences of surface cracks on a tensile stress values than the endurance limit for which the bearing was designed. These brittle fractures may occur either immediately when the load is applied or after only a few stress cycles.

When compressive prestress of sufficient magnitude is applied in a direction substantially perpendicular to the crack, the crack propagation is either halted or terminated after a finite growth as a result of stress relaxation in the material. Therefore, prestressing of the piezoceramic material not only improves load capacity and performance of the squeeze bearing, but also enhances operating life and functional reliability. These factors are of paramount interest in connection with the use of such bearings in commercial products.

How the invention can be carried out will now be described by way of example, with reference to the accompanying diagrammatic drawings in which:

FIG. 1 is a perspective representation of a piezoceramic driving member subjected to compression by a prestressing member;

FIG. 2 is a longitudinal cross-section of the members shown in FIG. 1;

FIG. 3 is a perspective representation of a squeeze bearing assembly in which the inner bearing member incorporates the members shown in FIGS. 1 and 2;

FIG. 4 is a perspective representation of a squeeze bearing assembly similar to that shown in FIG. 3, in which the inner bearing member comprises a bearing shell which is longer than the prestressed driving member;

FIG. 5 is a perspective representation of a squeeze bearing assembly in which the outer surface of the prestressing member serves as the bearing surface of the inner bearing member. FIG. 6 is a perspective representation of another type of squeeze bearing assembly in which the prestressed driving member of FIG. 1 is incorporated in the outer bearing member; and

FIG. 7 is a perspective representation of a bearing assembly similar to that shown in FIG. 6 in which the inner bearing member is substantially longer than the outer bearing member.

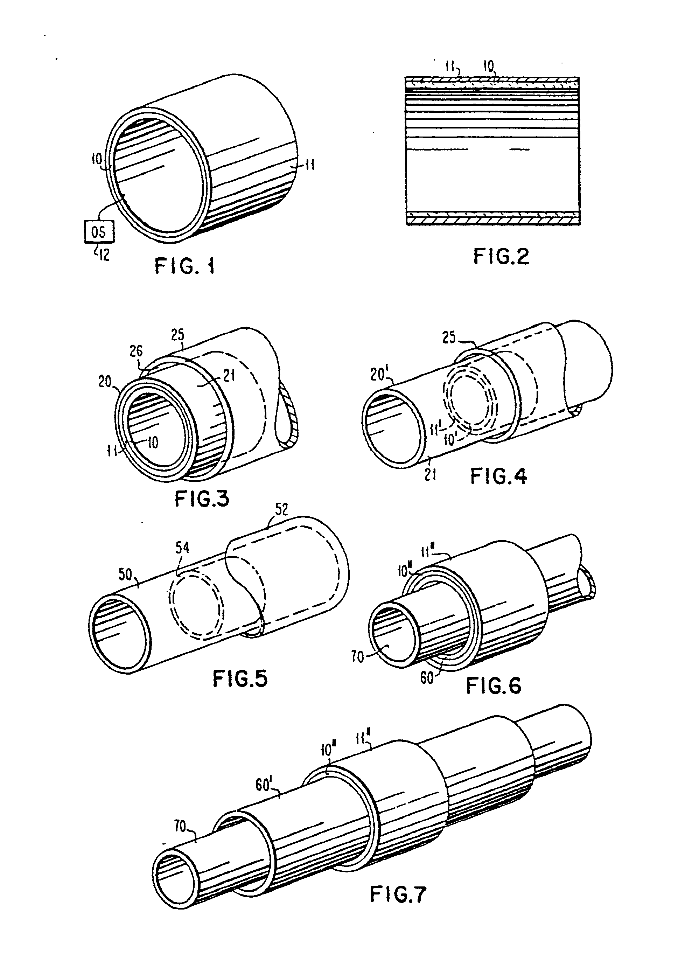

The assembly shown in FIG. 1 comprises a cylindrical piezoceramic member 10 and a cylindrical prestressing member 11. The piezoceramic member 10 is made of any suitable piezoceramic material known in the art, such as PZT-4, which will oscillate or change shape in response to an applied high voltage signal from a suitable oscillating source designated by a block in FIG. 1 having reference character 12. The prestressing cylindrical member 11 may be made of a metal, such as molybdenum, or an alloy. Alternatively, other material or composites such as carbon/graphite or glassfiber reinforced epoxies may be employed. Cylinders 10 and 11 may be assembled in any of the known methods to place cylinder 10 in radial and circumferential compression to an extent that when the high frequency signal is applied, cylinder 10 tends to stay in compression during the complete cycle of oscillation. The amount of radial and circumferential compression desired will determine the relationship of the inside diameter D1 of the prestressing member 11 and the outside diameter D2 of the piezoceramic member 10. The amount by which D1 is smaller than D2 will determine the amount of prestress applied and the choice of assembly methods. Shrink-fitting of the two cylinders is the preferred method of assembly where the prestressing cylinder is metallic.

Two types of bimorph cylindrical bearing members may be constructed employing the assembly of FIG. 1. The first type of bearing member is shown in FIG. 3 where the assembly of FIG. 1 is inserted into a cylindrical bearing shell 20 and fixedly attached thereto to form the vibrating oscillating member of the squeeze bearing. The composite bearing member shown in FIG. 3 is inserted into a larger cylindrical bearing member 25 so that the outer cylindrical surface 21 of bearing member 20 becomes the vibrating bearing member surface, while the inner surface 26 of bearing member 25 becomes the other bearing surface.

FIG. 4 shows a bearing member that is similar to that shown in FIG. 3, except that the bearing shell 20' extends beyond the ends of the prestressed cylindrical assembly 10', 11'.

In both the embodiments of the invention shown in FIGS. 3 and 4, the position of the prestressing cylinder in the composite structure does not affect the bimorph effect since the prestressing cylinder and the bearing shell are located on the same side of the piezoceramic cylindrical member. Any change of shape of the piezoceramic cylindrical member 10' about the vertical or horizontal cross-sectional axes during one cycle of the applied signal will be transmitted directly to the bearing shell 20' through the prestressing cylinder 11' since it is affixed to both members.

FIG. 5 illustrates an embodiment of the invention which is similar to that shown in FIGS. 3 and 4. As shown in FIG. 5, the function of the prestressing cylinder member 11' and the bearing shell 20 are combined into one integral member 50. As shown in FIG. 5, member 50 acts as the inner-bearing member relative to bearing member 52 and also as a prestressing cylinder for the piezoceramic member 54. The diameters of members 50 and 54 are such that member 54 is in radial and circumferential compression during substantially the entire vibrating cycle.

The second general type of squeeze bearing assembly is shown in FIGS. 6 and 7. As shown in FIG. 6, the prestressed assembly of FIG. 1 is placed over the bearing element 60 so that the piezoceramic material 10" is disposed between the bearing member 60 and the prestressing cylinder member 11". Since the piezoceramic cylindrical member 11" is under radial compression, the bimorph effect of the composite structure is reduced in the assembly of FIG. 6.

The bearing arrangement of FIG. 7 is similar to that of FIG. 6 except that the cylindrical bearing element 60 is much longer than the prestressed bearing assembly.

In both embodiments, the second bearing member 70 is shown as a rod disposed in a nested relationship internally of the cylindrical prestressed bearing element.

## Claims

1. A cylindrical squeeze bearing assembly comprising first and second coaxially arranged bearing members, the second bearing member being disposed within the first bearing member and one of the bearing members incorporating a piezoceramic driving member, the assembly being characterised by the piezoceramic driving member (10; 10'; 54; 10") being held within a prestressing member (11; 11'; 50; 11") so as to subject the piezoceramic member to radial and circumferential compression.

2. A bearing assembly (FIGS. 3, 4, 5) as claimed in claim 1, in which the piezoceramic member (11) is incorporated in the second bearing member.

3. A bearing assembly as claimed in claim 2, in which the second bearing member comprises an outer bearing shell (20) within which the prestressing member (11) is disposed.

4. A bearing assembly (FIG. 4) as claimed in claim 3, in which the outer bearing shell (20') is substantially longer than the prestressing member (11') and extends beyond each end thereof.

5. A bearing assembly (FIG. 5) as claimed in claim 2, in which the outer surface of the prestressing member (50) serves as the bearing surface of the second bearing member.

6. A bearing assembly as claimed in claim 5, in which the prestressing member (50) is substantially longer than the piezoceramic driving member (54) and extends beyond each end thereof.

7. A bearing assembly (FIG. 6) as claimed in claim 1, in which the piezoceramic driving member (10") is incorporated in the first bearing member and the first bearing member comprises an inner bearing shell (60) disposed inside the piezoceramic driving member (10'').

8. A bearing assembly (FIG. 7) as claimed in claim 7, in which the inner bearing shell (60') is substantially longer than the piezoceramic driving member (10'') and extends beyond each end thereof.

9. A bearing assembly as claimed in claim 7 or claim 8, in which the second bearing member is in the form of a rod (70).

## Patentansprüches

1. Zylindrisches Fluidlager, bei dem Druck durch Schwingungen erzeugt wird, mit einem ersten und einem zweiten koaxial angeordneten Lagerelement, wobei das zweite Lagerelement innerhalb des ersten Lagerelementes angeordnet ist und eines der Elemente ein piezokeramisches Antriebsteil beinhaltet, dadurch gekennzeichnet, daß das piezokeramische Antriebsteil (10; 10'; 54; 10'') innerhalb eines Vorspannelements (11; 11'; 50; 11'') gehalten wird, so daß auf die Umfangsfläche des piezokeramischen Teils ein radialer Druck ausgeübt wird.

2. Lager nach Anspruch 1, dadurch gekennzeichnet, daß das piezokeramische Teil (11) im zweiten Lagerelement angeordnet ist (Fig. 3,4,6).

3. Lager nach Anspruch 2, dadurch gekennzeichnet, daß das zweite Lagerelement eine äußere Lagerbüchse (20) aufweist, in der das Vorspannteil (11) angeordnet ist.

4. Lager nach Anspruch 3, dadurch gekennzeichnet, daß die äußere Lagerbüchse (20') erheblich länger ist als das Vorspannteil (11') und über dessen Enden jeweils hinausragt (Fig. 4).

5. Lager nach Anspruch 2, dadurch gekennzeichnet, daß die Außenfläche des Vorspannteils (50) als Lageroberfläche des zweiten Lagerelements dient (Fig. 5).

6. Lager nach Anspruch 5, dadurch gekennzeichnet, daß das Vorspannteil (50) erheblich länger ist als das piezokeramische Antriebsteil (54) und über dessen Enden jeweils hinausragt.

7. Lager nach Anspruch 1, dadurch gekennzeichnet, daß das piezokeramische Antriebsteil (10'') im ersten Lagerelement eingebettet ist und daß das erste Lagerelement eine innere Lagerbüchse (60) aufweist, welche sich innerhalb des piezckeramischen Antriebsteils (10'') befindet (Fig. 6).

8. Lager nach Anspruch 7, dadurch gekennzeichnet, daß die innere Lagerbüchse (60') erheblich länger ist als das piezokeramische Antriebsteil (10'') und über dessen Enden jeweils hinausragt (Fig. 7).

9. Lager nach Anspruch 7 oder 8, dadurch gekennzeichnet, daß das zweite Lagerelement die Form eines Rundstabes (70) aufweist.

## Revendications

Palier cylindrique à compression de fluide comportant des premier et deuxième éléments de palier placés coaxialement, le deuxième élément de palier étant disposé à l'intérieur du premier élément de palier et un des éléments de palier comportant un élément d'entraînement piézocéramique, l'agencement étant caractérisé en ce que l'élément d'entraînement piézocéramique (10; 10'; 54; 10'') est retenu à l'intérieur d'un élément de précontrainte (11; 11'; 50; 11'') de façon à soumettre l'élément piézocéramique à une compression radiale et periphérique.

2. Palier (Fig. 3, 4, 5) selon la revendication 1, dans lequel l'élément piézocéramique (11) est inclus dans le deuxième élément de palier.

3. Palier selon la revendication 2, dans lequel le deuxième élément de palier comporte une enveloppe extérieure (20) de palier à l'intérieur de laquelle est disposé l'élément de précontrainte (11).

4. Palier (Fig. 4) selon la revendicaticn 3, dans lequel, l'enveloppe exrérieure (20') de palier est sensiblement plus longue que l'élément de précontrainte (11') et s'étend au-delà de chaque extrémité de celui-ci.

5. Palier (Fig. 5) selon la revendication 2, dans lequel la surface extérieure de l'élément de précontrainte (50) sert de surface d'appui pour le deuxième élément de palier.

6. Palier selon la revendication 5, dans lequel l'élément de précontrainte (50) est sensiblement plus long que l'élément d'entraînement piézocéramique (51) et s'étend au-dela de chaque extrémité de celui-ci.

7. Palier (Fig. 6) selon la revendicaticn (10'') est inclus dans le premier élément de palier et le premier élément de palier comporte une enveloppe intérieure (60) de palier disposée à l'intérieur de l'élément d'entraînement piézocéramique (10'').

8. Palier (Fig. 7) selon la revendication 7, dans lequel l'enveloppe intérieure (60') de palier est sensiblement plus longue que l'élément d'entraînement piézocéramique (10'') et s'étend au-delà de chaque extrémite de celui-ci.

9. Palier selon la revendication 7 ou la revendication 8, dans lequel le deuxième élément de palier est sous forme de tige (70).

FIG. 1

FIG.2

FIG.3

FIG.4

FIG.5

FIG.6

FIG.7